# EUROPEAN PATENT SPECIFICATION

(11) **EP 4 499 558 B1**
(45) Date of publication and mention of the grant of the patent: **23.09.2026**
(21) Application number: 23719919.5
(22) Date of filing: 23.03.2023
(51) Int. Cl.: B66F 9/06, B66F 9/075, B66F 9/24

(54) **TRANSPORT APPARATUS AND METHOD FOR TRANSPORTING A LOAD**
TRANSPORTVORRICHTUNG UND VERFAHREN ZUM TRANSPORTIEREN EINER LAST
APPAREIL DE TRANSPORT ET PROCÉDÉ PERMETTANT DE TRANSPORTER UNE CHARGE

(30) Priority: 28.03.2022 NO 20220371
(43) Date of publication of application: 05.02.2025
(60) Divisional application: 26199371.1
(73) Proprietor: CASPER ROBOTICS AS, 4104 Jørpeland (NO)
(72) Inventor: VATHNE, Jørn, 4104 JØRPELAND (NO); IDSAL, Sveinung Andre, 4104 JØRPELAND (NO)
(74) Representative: Håmsø Patentbyrå AS
(86) International application number: PCT/NO2023/050064
(87) International publication number: WO 2023/191635

(56) References cited:
- EP-A1- 3 205 620
- WO-A1-2020/179386
- DE-A1- 102014 017 255
- US-A1- 2021 061 629
- US-A1- 2021 339 993

## Description

### FIELD OF THE INVENTION

The invention relates to a transport apparatus for a load and a method for transporting a load.

### BAKGROUND OF THE INVENTION

It is common to stack load or cargo on pallets, in for example factories, warehouses or in trucks for transportation. The pallets are usually lifted from the ground and transported using pallet transporters such as hand pallet trucks or forklifts. Common to these pallet transporters is that they require an area around the pallet in order to lift the pallet and move it around. Usually, the pallet transporters are limited to transport one pallet at the time. However, there are forklifts that may transport several pallets at the time, either by longer forks or a second set of forks. These types of forklifts typically require even more space around the pallets to be able to transport the pallets.

Publication EP2837545A2 discloses a conveying unit for conveying loaded or unloaded carriers. The conveying unit comprises a chassis which is movable on ground rollers, a support element carried by the chassis, which support element is liftable or lowerable with respect to the chassis, and a drive system by means of which at least one of the bottom rollers can be driven. The drive system comprises at least one drive assembly with a one-piece housing unit which supports the at least one drivable base roller and carries with it at least one drive device for this base roller. The support element is coupled to the drive assemblies.

Publication DK2772407T3 discloses a transportation device having a supporting element comprising a supporting part operatively connected to a wheel assembly, wherein the supporting part is and raised and lowered with respect to the wheel assembly.

Publications EP3205620A1 and EP2942313A1 disclose similar transportation apparatus as DK277240T3.

Publication WO2018211481A1 discloses an apparatus capable of entering the cavity of a pallet with the ultimate purpose of lifting it from the ground and moving or reorienting it before placing it back onto the ground. The pallet mover comprises at least two drive units, accompanied and mounted into at least two separate but connected structures to form a single device.

Publication DE102007015095A1 discloses an apparatus for lifting and moving a pallet. The apparatus comprises a lifting platform arranged on a chassis fitted with rollers. The apparatus consists exclusively of mechanical elements so that it is maintenance free, robust, and inexpensive to manufacture.

Publication DE102014017255A1 discloses a conveying unit for transporting load carriers, according to the preamble of claim 1.

### SUMMARY OF THE INVENTION

The invention has for its object to remedy or to reduce at least one of the drawbacks of the prior art, or at least provide a useful alternative to prior art.

The object is achieved through features, which are specified in the description below and in the claims that follow.

The invention is defined by the independent patent claims. The dependent claims define advantageous embodiments of the invention.

In a first aspect the invention relates more particularly to transport apparatus for a load. The transport apparatus comprises a chassis and a lifting plate. The chassis has a length and a width, and comprises:
- at least one lifting mechanism configured for moving the lifting plate between a lowered position and an elevated position in operational use; and
- a steering mechanism comprising at least two wheel assemblies at a mutual distance along the length of the chassis, wherein at least one of the at least two wheel assemblies is operatively connected to a drive motor for allowing steering of the transport apparatus; and a control unit for controlling the drive motor and the lifting mechanism.

The transport apparatus is configured to be movable into and through a cavity in the load when the lifting plate is in the lowered position.

The lifting plate is movable relative to the chassis, and the at least one lifting mechanism is connected to the lifting plate and to the chassis.

The at least one wheel assembly is operatively connected to the drive motor and is pivotably connected to the chassis, and comprises a pair of parallel wheels and two respective drive motors, wherein each wheel in the pair of parallel wheels is operatively connected to one of the respective drive motors.

The effects of the features of the transport apparatus in accordance with the invention are as follows. First of all, the transport apparatus can be easily used to transport loads or cargos having a suitable cavity. The load may typically be a load carrier such as a pallet, with or without an added load. The transport apparatus may first be driven into a cavity in the load while the lifting plate is in the lowered position. When the transport apparatus is within the cavity, the lifting mechanism may then move at least the lifting plate to the elevated position which lifts the load from the ground. While the load is lifted from the ground, the transport apparatus may move the load to a desired location where the lifting mechanism may lower at least the lifting plate to the lowered position to put the load on the ground again.

Furthermore, the transport apparatus is configured to be movable into and through a cavity in the load. This feature has several advantages. Firstly, the transport apparatus can be positioned completely underneath the load before lifting and transporting it. This means that the transport apparatus according to the invention does not need an area around the load in order to lift it and manoeuvre it. A second advantage of the transport apparatus being movable through a cavity in the load, is that several transport apparatuses can be used to move a load each, at the same time. A row of transport apparatuses can be moved underneath a row of loads so that each transport apparatus is underneath a respective load. The loads can be simultaneously lifted and transported, in a trainlike manner, to a desired location. More than one row of loads can also be moved simultaneously.

This is an advantage for example when unloading a truck where the cargo is stored on pallets. A row, or several rows of transport apparatuses can be driven into a cargo space of the truck, lift the pallets and move the pallets to a desired location inside or outside of the cargo space. The truck is in this way unloaded in a single operation. This also applies to loading a truck with pallets.

Due to the transport apparatus being movable into and through a cavity in a load, loads can be stored in a more compact manner. There is no need for an area around a load for lifting it, and several loads are movable at the same time, as explained above. This is an advantage in warehouses where cargos or loads are stored on pallets. Typically, the pallets are stored in rows with spaces between them, so that a pallet transporter, for example a forklift, may move between the rows, lift a pallet, and move it. When using the transport apparatus according to the first aspect of the invention, there is no need for space between rows of pallets for the transport apparatus to be moved around. The transport apparatus can be driven underneath and through pallets to the next desired pallet in the row, instead of beside them. This enables construction of a space saving storage system, where the pallets may be stored more tightly.

Throughout the description and claims, the wording "lowered position" must be interpreted as a position of the lifting plate which is low enough for the transport apparatus to drive into a cavity of in load. The lowered position may be the lowest possible position of the lifting plate, or it may be higher than the lowest possible position of the lifting plate.

Throughout the description and claims, the wording "elevated position" must be interpreted as a position of the lifting plate which is high enough for the transport apparatus to lift the load from the ground. The elevated position may be the highest possible position of the lifting plate, or it may be lower than the highest possible position of the lifting plate.

Throughout the description and claims, the word "load" must be interpreted as any type of load with a suitable cavity for the transport apparatus to be moved into and through. The load may be a load carrier, such as a pallet or a skid or a skid pallet, for example a so-called Euro-pallet. The load carrier will hereinafter be denoted pallet for simplicity. The load may also be a storage unit such as a crate. The load carrier or the storage unit may carry a cargo or a load, or it may be empty. The pallet may have bottom decks. Throughout the description and the claims, position indications such as «upper» and «lower», «top» and «bottom», or «horizontal» and «vertical», etc., denotes the position the apparatus has in the subsequent figures, which is also a natural or practical functional position of the apparatus.

The lifting plate may in an embodiment not forming part of the present invention, be secured to the chassis. In such an embodiment, the chassis comprises at least two lifting mechanisms, wherein each of the at least two lifting mechanisms is connected to a respective wheel assembly and to the chassis.

In such an embodiment, both the chassis and the lifting plate are movable relative to the at least two wheel assemblies. The at least two lifting mechanisms may move the chassis and the lifting plate from the lowered position to the elevated position in order to lift a load. The at least two lifting mechanisms may move the chassis and the lifting plate from the elevated position to the lowered position in order to put a load on the ground.The chassis may further comprise at least two biasing means, each biasing means extending between a portion of the chassis and a respective wheel assembly. The biasing means may be a spring. The biasing means may facilitate the lifting of the chassis and the lifting plate to the elevated position by the lifting mechanism, especially at the start of the lifting process.

According to the invention, and as stated above, the lifting plate is movable relative to the chassis and the at least one lifting mechanism is connected to the lifting plate and to the chassis. It is advantageous to move the lifting plate relative to the chassis because less force is needed compared to lifting both the lifting plate and the chassis. Further, a centre of gravity of the transport apparatus will be lower in this embodiment as compared with the embodiment wherein each of the at least two lifting mechanisms is connected to a respective wheel assembly. A low centre of gravity provides a more stable transport appratus.

In embodiments where the chassis comprises several lifting mechanisms, each lifting mechanism may lift one lifting plate each, preferably in a substantially paralell movement. The several lifting mechanisms may also be connected to the same lifting plate.

According to the invention, at least one of the at least two wheel assemblies is operatively connected to a drive motor. The at least one wheel assembly being operatively connected to the drive motor is pivotably connected to the chassis for allowing steering of the transport apparatus.

The at least one of the at least two wheel assemblies may comprise one wheel operatively connected to a drive motor and being pivotably connected to the chassis.

By the term pivotably is meant that the wheel assembly or a wheel comprised within the wheel assembly is turnable around an axis being perpendicular to the axis of rotation of the wheel.

In an embodiment according to the invention the at least two wheel assemblies are operatively connected to a drive motor and are pivotably connected to the chassis for enhancing steering of the transport apparatus.

The at least two wheel assemblies may each comprise one wheel operatively connected to a respective drive motor and being pivotably connected to the chassis.

In an embodiment according to the invention the at least two wheel assemblies are pivotable over at least 90 degrees to obtain movability and rotatability in a two-dimensional plane supporting the transport apparatus. The advantage of this feature is that the transport apparatus can be moved and rotated in any x- or y-direction relative to a two-dimensional plane supporting the transport apparatus, for example the floor of a warehouse or storage facility. The apparatus is movable in a direction parallel to the length of the apparatus, in a direction perpendicular to the length of the apparatus, and in any direction therebetween.

At least one of the at least two wheel assemblies comprises a pair of mutually spaced, parallel wheels. The advantage of the pair of mutually spaced wheels is that the steering of the direction of the wheels may be done with two drive motors connected to a respective wheel in the pair.

In one embodiment, both or all of the at least two wheels may comprise a pair of mutually spaced, parallel wheels.

In an embodiment not according to the invention, the steering mechanism comprises at least one first wheel assembly and a second wheel assembly arranged distant from the first wheel assembly along the length of the chassis. The first wheel assembly comprises two wheels, each wheel being operatively connected to a respective drive motor, wherein an axis of rotation of one of the wheels in the first wheel assembly is perpendicular to an axis of rotation of the other wheel in the first wheel assembly, and wherein the wheels in the first wheel assembly are liftable and lowerable independently of each other.

The two wheels in the first wheel assembly may be lowered so that they are in contact with the ground. They may also be lifted so that they are not in contact with the ground. When one of the wheels in the first wheel assembly is lowered to the ground, the other wheel in the first wheel assembly may be lifted from the ground, so that the transport apparatus may be driven in the direction in which the lowered wheel is rotating. To change the direction of the transport apparatus, the wheel is lifted from the ground and the other wheel is lowered to the ground.

Each wheel in the first wheel assembly may comprise a pair of mutually spaced, parallel wheels, wherein at least one wheel in each pair of wheels is operatively connected to a respective drive motor, and wherein the pairs of wheels are liftable and lowerable independently of each other.

The axis of rotation of one of the wheels in the first wheel assembly may be parallel to the length of the chassis. The other wheel in the first wheel assembly may be parallel to the width of the chassis.

In an embodiment of the invention, the second wheel assembly is identical to the first wheel assembly. The advantage of this feature is that the transport apparatus can be moved and rotated in any x- or y-direction relative to a two-dimensional plane supporting the transport apparatus, for example the floor of a warehouse or storage facility. The apparatus is movable in a direction parallel to the length of the apparatus, in a direction perpendicular to the length of the apparatus, and in any direction therebetween.

In an embodiment according to the invention, the length of the chassis is longer than the width of the chassis. This is advantageous for example if the load to be transported comprises an oblong cavity. A pallet, such as a Euro-pallet, is provided with oblong cavities. The transport apparatus may be configured to fit within one of the cavities in for example a Euro-pallet. Two transport apparatuses can be used to easily transport a Euro-pallet by being moved into a respective cavity, and then activating the lifting mechanisms to move the lifting plates into the elevated position to lift the pallet.

The chassis may comprise two or more lifting mechanisms connected to the lifting plate. The two or more lifting mechanisms may be mutually spaced along the length of the chassis. Two or more lifting mechanisms may facilitate the lifting of the load as the load will be lifted from several points. The lifting and lowering of the load may be more stable. Two or more lifting mechanisms may also lift a heavier load, or the lifting capacity of each lifting mechanism may be reduced.

In an embodiment according to the invention, the chassis comprises at least one biasing means extending between a portion of the chassis and the lifting plate. The biasing means may be a spring. The biasing means may facilitate the lifting of the lifting plate to the elevated position by the lifting mechanism, especially at the start of the lifting process.

In a preferred embodiment of the transport apparatus according to the invention, the lifting plate covers a top side of the chassis. This leads to more stability when lifting and lowering a load as the load will be evenly distributed on the area of the lifting plate.

The transport apparatus may further comprise at least one sensor. The at least one sensor may comprise a distance detector, which is advantageous for preventing collisions.

The at least one sensor may comprise a sensor for detecting visual id tags or RFID (Radio Frequency Identification) tags. It is advantageous for the transport apparatus to read visual id tags, such as QR codes or barcodes, or RFID tags to recognise loads marked with such tags. Furthermore, the at least one sensor may comprise sensors for detecting external guiding means, for example a coloured line or electromagnetic fields. It is advantageous for the transport apparatus to detect external guiding means, so that the transport apparatus can be moved along such external guiding means. Furthermore, the at least one sensor may comprise a sensor for detection RFID tags to detect external guiding positions. The at least one sensor may also comprise a camera, a microphone, and a thermometer. The transport apparatus may also comprise a local position system.

The transport apparatus may also be provided with an output system for information to an operator. The output system may comprise a screen for information, a speaker, or lights.

As stated above, the transport apparatus according to the invention comprises a control unit for controlling the steering mechanism and the lifting mechanism of the transport apparatus.

In addition to the steering mechanism, the control unit may control the transport apparatus with respect to speed. The control unit is configured to control the activation of the at least one lifting mechanism for moving the lifting plate to the lowered or elevated position. The control unit may receive data from the at least one sensor.

The transport apparatus may be configured for wireless communication with other transport apparatus according to the invention. The wireless communication is through any known wireless communications protocol.

The wireless communication may facilitate simultaneous operation of several transport apparatuses. A transport apparatus may be in a master/slave system with another transport apparatus or several transport apparatuses. The transport apparatuses may also be in a master/master system.

The transport apparatus may further be configured for wireless communication with an external control system through any known wireless communications protocol. The external control system may be used to control one or several transport apparatuses. This can facilitate simultaneous operation of several transport apparatuses.

In a second aspect the invention relates to a transport system comprising at least two transport apparatuses according to the first aspect of the invention. A transport system comprising several transport apparatuses can be used to create an efficient storage system. As explained above, several transport apparatuses in a row, or in several rows, can be used to simultaneously move several loads, typically pallets.

The transport system according to the second aspect of the invention may comprise an external control system. The external control system can be used to control the transport apparatuses in the transport system, and thus facilitate simultaneous operation of the transport apparatuses. The transport system may be fully automated.

In a third aspect the invention relates to a method for transporting a load. The method comprising the steps:
- providing a transport apparatus according to the first aspect of the invention;
- moving the transport apparatus under the load while the lifting plate is in the lowered position;
- activating the at least one lifting mechanism to move at least the lifting plate to the elevated position to lift the load;
- moving the transport apparatus to a desired position;
- activating the at least one lifting mechanism to lower at least the lifting plate to the lowered position to bring the load back onto the ground.

The method according to the third aspect of the invention is an easy and space-saving method for moving and storing a load. After the transport operation is complete, the transport apparatus may be stored underneath the load it has transported so that is does not take up space on for example a storage floor.

The method may further comprise moving the transport apparatus away from the load. The transport apparatus may be moved to for example a charging station or a specified storage area for the transport apparatus.

The method may further comprise moving the transport apparatus through a cavity in a load while the lifting plate is in the lowered position. This step may be performed if the load to be transported is stored behind other loads. The load to be transported may easily be reached by a transport apparatus driving beneath the loads stored in front of the load to be transported.

The method may further comprise providing a transport system according to the second aspect of the invention.

The method wherein the transport system comprises several transport apparatuses may for example be used to easily access a load that is stored behind other loads. Some of the transport apparatuses in the system may be used to move the loads away so that the desired load can easily be accessed.

### BRIEF INTRODUCTION OF THE FIGURES

In the following is described an example of a preferred embodiment illustrated in the accompanying drawings, wherein:
- Fig. 1a: shows a transport apparatus from above;
- Fig. 1b: shows the transport apparatus from Fig. 1a from the side, with the lifting plate in the lowered position;
- Fig. 1c: shows the transport apparatus from Fig. 1b, with the lifting plate in the elevated position;
- Fig. 2a: shows a cross-section through C-C of the transport apparatus in Fig. 1b;
- Fig. 2b: shows the same cross-section as Fig. 2a, with the wheels turned 90 degrees;
- Fig 3a: shows a cross-section through D-D of the transport apparatus from Fig. 1b, with the lifting plate in the lowered position;
- Fig 3b: shows the same cross-section of the transport apparatus from Fig. 3a, with the lifting plate in the elevated position;
- Fig 4a: shows a cross-section of the transport apparatus along the line A-A in Fig. 2a, with the lifting plate in the lowered position;
- Fig 4b: shows the same cross-section of the transport apparatus from Fig. 4a, with the lifting plate in the elevated position;
- Fig 5a: shows a cross-section of the transport apparatus along the line B-B in Fig. 3a, with the lifting plate in the lowered position;
- Fig 5b: shows the same cross-section of the transport apparatus from Fig. 5a, with the lifting plate in the elevated position; and
- Figs 6a-6c: show a process of transporting three loads simultaneously by a transport system according to the invention.

Any positional indications refer to the position shown in the figures.

In the figures, same or corresponding elements are indicated by same reference numerals. For clarity reasons, some elements may in some of the figures be without reference numerals.

A person skilled in the art will understand that the figures are just principal drawings. The relative proportions of individual elements may also be distorted.

In the figures, reference number 1 denotes a transport apparatus for a load, comprising a chassis 12 and a lifting plate 15. In the example shown in the figures, the lifting plate 15 is movable relative to the chassis 12. The chassis 12 comprises at least one lifting mechanism 20 connected to the lifting plate 15. The lifting mechanism 20 is configured for moving the lifting plate 15 between a lowered position 81 and an elevated position 89 in operational use. The chassis 12 further comprises a steering mechanism, here shown as two wheel assemblies 30 at a mutual distance along the length of the chassis 12. Each wheel assembly 30 comprises a pair of parallel wheels 32. Each wheel 32 in the pairs of wheels 32 is operatively connected to a respective drive motor 31. In the embodiment shown in the figures, each pair of wheels 32 is pivotably connected to the chassis 12 for allowing turning of the wheels 32 with respect to an axis being perpendicular to the shafts of the wheels 32, thereby allowing steering of the transport apparatus 1. The transport apparatus 1 is configured to be movable into and through a cavity in the load when the lifting plate 15 is in the lowered position 81.

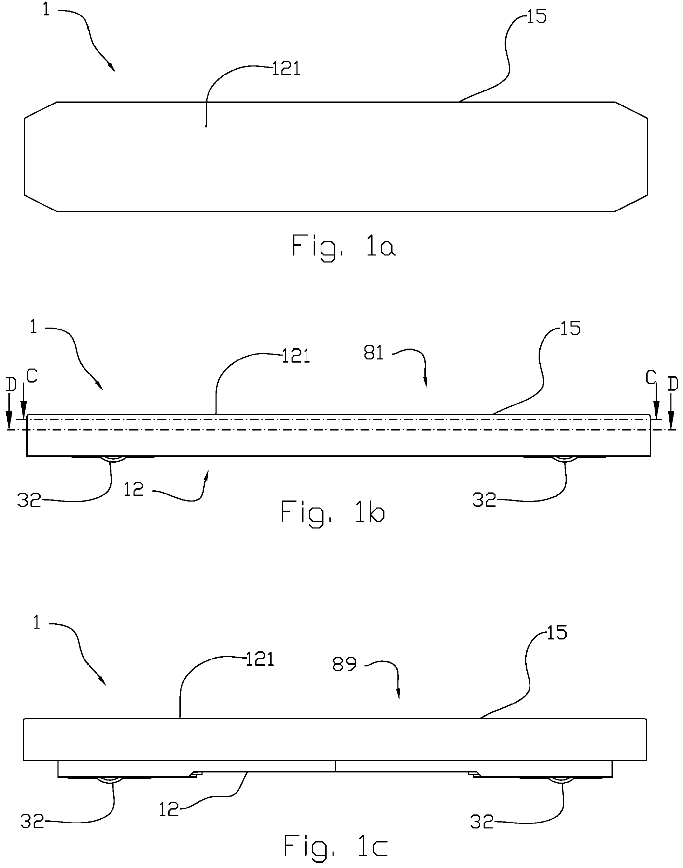

The transport apparatus 1 is shown from above in Fig. 1a. The length of the transport apparatus 1 is in this example larger than the width of the transport apparatus 1, a shape suitable for fitting into one of the cavities of a load such as a Euro-pallet or any other load comprising an oblong cavity. When the lifting plate 15 is in the lowered position 81 as shown in Fig. 1b, the height of the transport apparatus 1 is such that the transport apparatus 1 can pass into a cavity in for example a Euro-pallet. In the elevated position 89, shown in Fig. 1b, the lifting plate 15 has been elevated compared to the lowered position 81. In a prototype of the transport apparatus 1 adapted for handling Euro-pallets, the lifting plate 15 may be elevated by approximately 3 cm with respect to its lowered position 81. The lifting plate 15 can therefore lift the Euro-pallet from the ground. The elevated position 89 may be higher than 3 cm above the lowered position 81, or the elevated position 89 may be less than 3 cm above the lowered position 81. The prototype of the transport apparatus 1 as shown in the figures is configured to lift a load of up to one ton. Two such prototypes may together lift a load of up to two tons. Other examples of the transport apparatus according to the invention may lift a load of more than one ton.

In the example shown in Fig. 1a - 1c, the lifting plate 15 covers a top side 121 of the chassis 12, and encloses a portion of the chassis 12, especially when the lifting plate 15 is in the lower position 81.

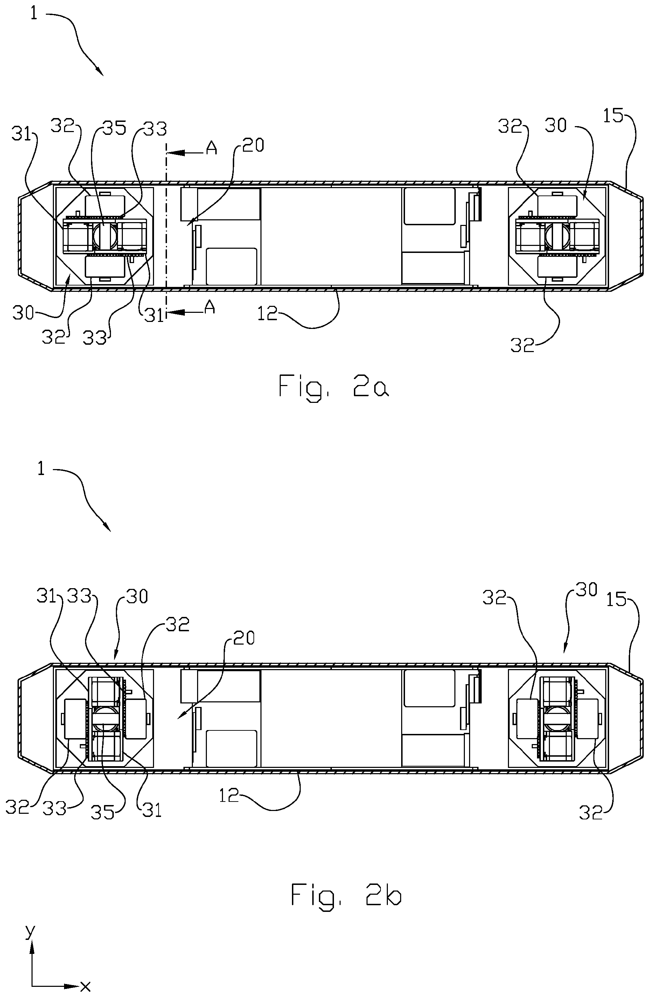

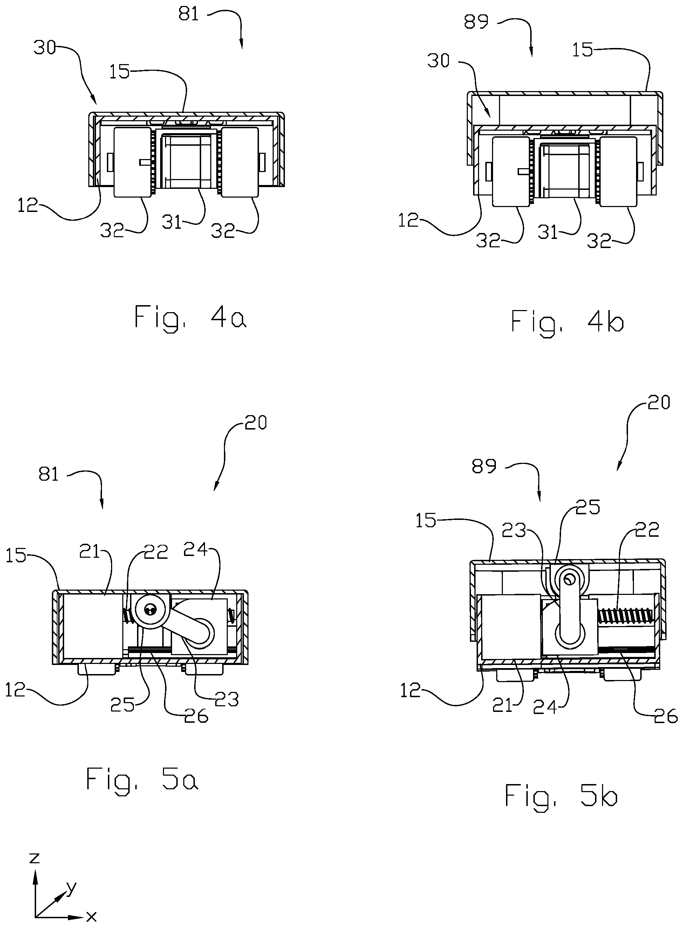

The steering mechanism of the transport apparatus 1 is shown in Fig. 2a and Fig. 2b. The steering mechanism comprises two pair of wheels 32 at a mutual distance along the length of the chassis 12. Each wheel 32 in the pairs is connected to a drive motor 31 through a respective drive chain or gear 33. The drive motor 31 is configured for rotating the respective wheel 32 in two directions, i.e., both in a clockwise and an anticlockwise direction. The two wheels 32 in the pairs are rotatably connected to a shaft 35. The wheels 32 in a pair can be seen in Fig. 4a and 4b.

By rotating one of the wheels 32 in the pair in one direction, and the other wheel 32 in the pair the other direction, the pair of wheels 32 can be turned or pivoted 90 degrees, as shown in Fig. 2b. The transport apparatus 1 can in this way be moved and rotated in any x- or y-direction relative to the two-dimensional plane supporting the transport apparatus 1. Thus, the transport apparatus 1 is movable in a direction parallel to the length of the transport apparatus 1 (in an x-direction in Fig. 2a), and in a direction perpendicular to the length of the transport apparatus 1 (in a y-direction in Fig. 2b), and in any direction therebetween.

In another example (not shown) of the transport apparatus 1, the steering mechanism comprises two single wheels at a mutual distance along the length of the chassis 12. The wheels are connected to a respective drive motor, for rotating the wheels, and to a shaft connected to a second motor for adjusting the direction of the wheels.

In yet another example (not shown) of the transport apparatus 1, the steering mechanism comprises two wheel assemblies, wherein each wheel assembly comprises two wheels. The two wheels in the wheel assemblies are rotatable in different directions, the directions being perpendicular to each other. One of the wheels may rotate in a direction parallel to the length of the transport apparatus 1, and the other in a direction parallel to the width of the transport apparatus 1. The two wheels in the wheel assemblies are liftable and lowerable independently of each other. The direction of the movement of the transport apparatus 1 depends on which wheel in the wheel assemblies are in contact with the ground. The wheels in the wheel assemblies may also comprise a pair of mutually spaced, parallel wheels.

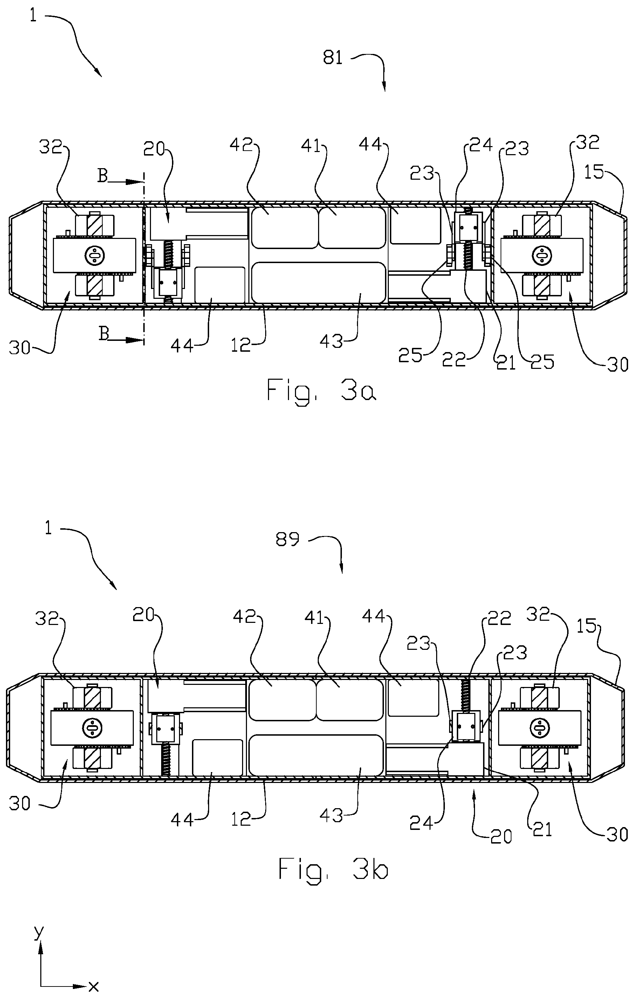

In the example shown in the figures, the transport apparatus 1 comprises two lifting mechanisms 20 at a mutual distance along the length of the chassis 12. The lifting mechanisms 20 for moving the lifting plate 15 between the lowered position 81 and the elevated position 89 are best shown in Fig. 3a, 3b, 5a and 5b. Each lifting mechanism 20 comprises a screw 22, which is operatively connected to a motor 21 configured for rotating the screw 22. The lifting mechanism 20 further comprises a slide member 24, movable along a guide 26, and operatively connected to the screw 22, such as when the screw 22 rotates, the slide member 24 is moved along the screw 22. An arm 23 is pivotably connected to the slide member 24 and to a coupling 25 fastened to the lifting plate 15.

When the slide member 24 is approximately at the end of the screw 22, as shown in Fig. 5a, an angle between a longitudinal axis of the arm 23 and a top surface of the lifting plate 15 is at a minimum, and the lifting plate 15 is in the lowered position 81. As the screw 22 rotates, the slide member 24 is moved towards the motor 21, i.e., from right to left in Figs. 5a and 5b. The angle between the longitudinal axis of the arm 23 and the top surface of the lifting plate is now 90 degrees, and the lifting plate 15 is moved to the elevated position 89. To move the lifting plate 15 back to the lowered position 81, the screw 22 is rotated in the opposite direction, moving the slide member 24 towards the end of the screw 22.

In another example (not shown) of the transport apparatus 1, biasing means such as springs are extending between a portion of the chassis 12 and the lifting plate 15. For example four springs, one inside each corner of the chassis 12 of the transport apparatus 1. The force needed for moving the lifting plate 15 to the elevated position 89 is highest when the angle between the longitudinal axis of the arm 23 and the top surface of the lifting plate 15 is at a minimum. The springs facilitate the lifting of the lifting plate at the start of the movement from the lowered position 81 to the elevated position 89.

The transport apparatus 1 can be driven in any direction in the xy-plane (Fig. 2b) and lift a load on the lifting plate 15 in the z-direction (Fig 5a).

The transport apparatus 1 shown in the figures is configured for remote operation. The chassis 12 comprises a control unit (not shown). The control unit comprises a transceiver (not shown) configured for wireless communication with other transport apparatuses 1 or an external control system (not shown). The chassis 12 comprises further a motor drive unit 44 which controls the movement of the transport apparatus 1 in the x- and y- direction. The movement of the lifting plate 15 in the z-direction is controlled by a relay (not shown). Furthermore, the chassis 12 comprises batteries 42 and 43 for the motor drive unit 44, the motors 21 of the lifting mechanisms 20 and the control unit. The chassis 12 also comprises an electronic unit 41 for distribution of power from the batteries 42 and 43. The electronic unit 41 is also used when the transport apparatus 1 is connected to a power supply (not shown) for charging.

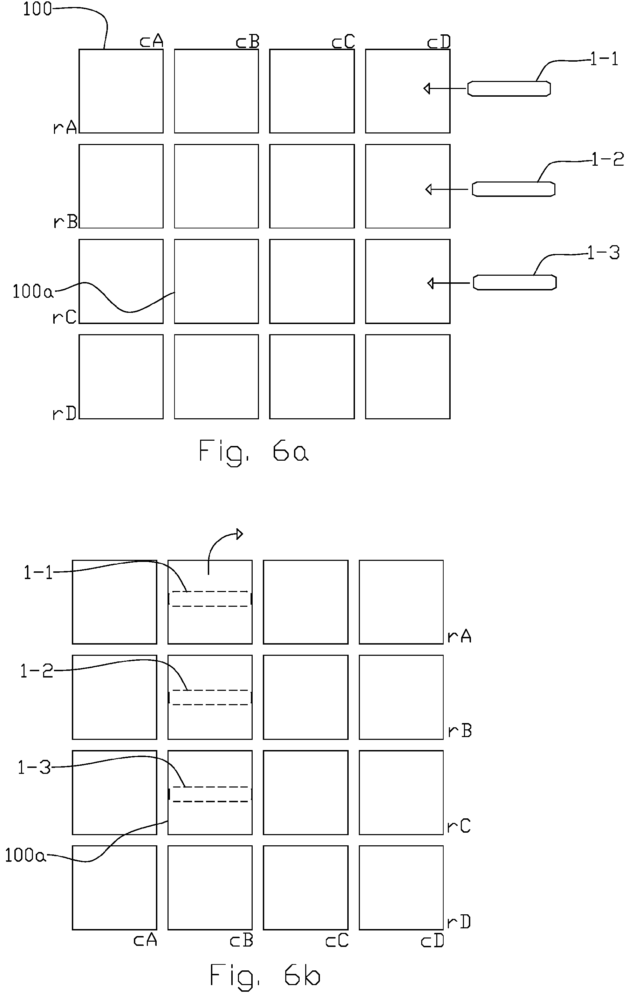

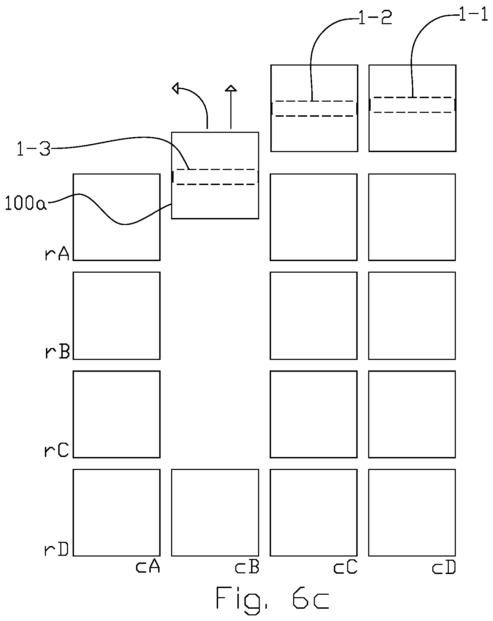

Figs. 6a to 6c show a storage system comprising sixteen loads 100 stored in a compact manner. The loads 100 are stored in rows rA to rD and columns cA to cD. A load 100a is stored in the middle of the storage system in row rC and column cB and is strenuous to get out using conventional load carriers. Figs. 6a to 6c illustrates how a transport system comprising three transport apparatuses 1-1, 1-2, and 1-3 can be used to easily reach the desired load 100a. In Fig. 6a each transport apparatus 1-1, 1-2, and 1-3 is aligned with a row of loads 100, rA, rB, and rC, respectively. The lifting plates 15 of the transport apparatuses 1-1, 1-2, and 1-3 are in the lowered position 81 (see Fig. 4a), so that the transport apparatuses 1-1, 1-2, and 1-3 can be driven underneath the loads 100 in columns cC and cD to reach the column cB where the desired load 100a is stored. When the transport apparatuses 1-1, 1-2, and 1-3 are underneath the loads 100 in the column cB, see Fig. 6b, the three transport apparatuses 1-1, 1-2, and 1-3 can each lift its respective load 100 and simultaneously transport it out of the storage system following the arrow shown in Fig. 6b. Fig. 6c shows the transport apparatus 1-3 driving the desired load 100a out from the storage system, following one of the arrows in Fig. 6c.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise", and its conjugations does not exclude the presence of elements or steps other than those stated in a claim. The article "a" or "an" preceding an element does not exclude the presence of a plurality of such elements.

## Claims

1. A transport apparatus (1) for a load, comprising a chassis (12) and a lifting plate (15), the chassis (12) having a length and a width, and wherein the chassis (12) comprises:
- at least one lifting mechanism (20) configured for moving the lifting plate (15) between a lowered position (81) and an elevated position (89) in operational use; and
- a steering mechanism comprising at least two wheel assemblies (30) at a mutual distance along the length of the chassis (12), wherein at least one of the at least two wheel assemblies (30) is operatively connected to a drive motor (31) for allowing steering of the transport apparatus (1); and
- a control unit for controlling the drive motor (31) and the lifting mechanism (20),
wherein the transport apparatus (1) is configured to be movable into and through a cavity in the load when the lifting plate (15) is in the lowered position (81),
and wherein the lifting plate (15) is movable relative to the chassis (12), wherein the at least one lifting mechanism (20) is connected to the lifting plate (15) and to the chassis (12)
**characterized in that** the at least one wheel assembly (30) being operatively connected to the drive motor (31) is pivotably connected to the chassis (12), and comprises a pair of parallel wheels (32) and two respective drive motors (31), wherein each wheel (32) in the pair of parallel wheels (32) is operatively connected to one of the respective drive motors (31).

2. The transport apparatus (1) according to claim 1, wherein the at least two wheel assemblies (30) are operatively connected to a drive motor (31) and are pivotably connected to the chassis (12) for enhancing steering of the transport apparatus (1).

3. The transport apparatus (1) according to claim 1 or 2, wherein the at least two wheel assemblies (30) are pivotable over at least 90 degrees to obtain movability and rotatability in a two-dimensional plane supporting the transport apparatus (1).

4. The transport apparatus (1) according to any one of the preceding claims, wherein the chassis (12) comprises at least one biasing means extending between a portion of the chassis (12) and the lifting plate (15).

5. The transport apparatus (1) according to any one of the preceding claims, wherein the transport apparatus (1) is configured for wireless communication with other transport apparatuses (1) according to any one of the preceding claims.

6. The transport apparatus (1) according to any one of the preceding claims, wherein the transport apparatus (1) is further configured for wireless communication with an external control system.

7. A transport system comprising at least two transport apparatuses (1) according to any one of the preceding claims.

8. The transport system according to claim 7 further comprising an external control system.

9. A method for transporting a load, the method comprising the steps:
- providing a transport apparatus (1) according to any one of claims 1 to 8;
- moving the transport apparatus (1) into a cavity in the load while the lifting plate (15) is in the lowered position (81);
- activating the at least one lifting mechanism (20) to move at least the lifting plate (15) to the elevated position (89), to lift the load;
- moving the transport apparatus (1) to a desired position;
- activating the at least one lifting mechanism (20) to lower at least the lifting plate (15) to the lowered position (81) to bring the load back onto the ground.

10. The method according to claim 9, further comprising moving the transport apparatus (1) through a cavity in a load while the lifting plate (15) is in the lowered position (81).

11. The method according to claim 9 or 10, further comprising providing a transport system according to claim 7 or 8.

## Patentansprüche

1. Transportvorrichtung (1) für eine Last, umfassend ein Fahrgestell (12) und eine Hebeplatte (15), wobei das Fahrgestell (12) eine Länge und eine Breite aufweist und wobei das Fahrgestell (12) umfasst:
- mindestens einen Hebemechanismus (20), der so ausgebildet ist, dass er die Hebeplatte (15) im Betrieb zwischen einer abgesenkten Position (81) und einer angehobenen Position (89) bewegt; und
- einen Lenkmechanismus, der mindestens zwei Radanordnungen (30) umfasst, die entlang der Länge des Fahrgestells (12) in einem gegenseitigen Abstand zueinander angeordnet sind, wobei mindestens eine der mindestens zwei Radanordnungen (30) betriebsmäßig mit einem Antriebsmotor (31) verbunden ist, um das Lenken der Transportvorrichtung (1) zu ermöglichen; und
- eine Steuereinheit zur Steuerung des Antriebsmotors (31) und des Hebemechanismus (20),
wobei die Transportvorrichtung (1) so ausgebildet ist, dass sie in einen Hohlraum in der Last hinein und durch diesen hindurch bewegbar ist, wenn sich die Hebeplatte (15) in der abgesenkten Position (81) befindet,
und wobei die Hebeplatte (15) relativ zu dem Fahrgestell (12) bewegbar ist, wobei der mindestens eine Hebemechanismus (20) mit der Hebeplatte (15) und dem Fahrgestell (12) verbunden ist
**dadurch gekennzeichnet, dass** die mindestens eine Radanordnung (30), die betriebsmäßig mit dem Antriebsmotor (31) verbunden ist, schwenkbar mit dem Fahrgestell (12) verbunden ist, und ein Paar paralleler Räder (32) sowie zwei entsprechende Antriebsmotoren (31) umfasst,
wobei jedes Rad (32) in dem Paar paralleler Räder (32) mit einem der entsprechenden Antriebsmotoren (31) betriebsmäßig verbunden ist.

2. Transportvorrichtung (1) nach Anspruch 1, wobei die mindestens zwei Radanordnungen (30) betriebsmäßig mit einem Antriebsmotor (31) verbunden sind und schwenkbar mit dem Fahrgestell (12) verbunden sind, um das Lenken der Transportvorrichtung (1) zu verbessern.

3. Transportvorrichtung (1) nach Anspruch 1 oder 2, wobei die mindestens zwei Radanordnungen (30) um mindestens 90 Grad schwenkbar sind, um eine Beweglichkeit und Drehbarkeit in einer die Transportvorrichtung (1) tragenden zweidimensionalen Ebene zu erzielen.

4. Transportvorrichtung (1) nach einem der vorstehenden Ansprüche,
wobei das Fahrgestell (12) mindestens ein Vorspannmittel umfasst, das sich zwischen einem Abschnitt des Fahrgestells (12) und der Hebeplatte (15) erstreckt.

5. Transportvorrichtung (1) nach einem der vorstehenden Ansprüche,
wobei die Transportvorrichtung (1) für eine drahtlose Kommunikation mit anderen Transportvorrichtungen (1) nach einem der vorstehenden Ansprüche ausgebildet ist.

6. Transportvorrichtung (1) nach einem der vorstehenden Ansprüche,
wobei die Transportvorrichtung (1) weiter für eine drahtlose Kommunikation mit einem externen Steuersystem ausgebildet ist.

7. Transportsystem, das mindestens zwei Transportvorrichtungen (1) nach einem der vorstehenden Ansprüche umfasst.

8. Transportsystem nach Anspruch 7, das weiter ein externes Steuersystem umfasst.

9. Verfahren zum Transportieren einer Last, wobei das Verfahren die Schritte umfasst von:
- Bereitstellen einer Transportvorrichtung (1) nach einem der Ansprüche 1 bis 8;
- Bewegen der Transportvorrichtung (1) in einen Hohlraum in der Last, während sich die Hebeplatte (15) in der abgesenkten Position (81) befindet;
- Aktivieren des mindestens einen Hebemechanismus (20), um mindestens die Hebeplatte (15) in die angehobene Position (89) zu bewegen und so die Last anzuheben;
- Bewegen der Transportvorrichtung (1) in eine gewünschte Position;
- Aktivieren des mindestens einen Hebemechanismus (20), um mindestens die Hebeplatte (15) in die abgesenkte Position (81) abzusenken und die Last zurück auf den Boden zu bringen.

10. Verfahren nach Anspruch 9, das weiter das Bewegen der Transportvorrichtung (1) durch einen Hohlraum in einer Last umfasst, während sich die Hebeplatte (15) in der abgesenkten Position (81) befindet.

11. Verfahren nach Anspruch 9 oder 10, das weiter das Bereitstellen eines Transportsystems nach Anspruch 7 oder 8 umfasst.

## Revendications

1. Appareil de transport (1) pour une charge, comprenant un châssis (12) et une plaque de levage (15), le châssis (12) présentant une longueur et une largeur, et dans lequel le châssis (12) comprend :
- au moins un mécanisme de levage (20) configuré pour déplacer la plaque de levage (15) entre une position abaissée (81) et une position élevée (89) en utilisation opérationnelle ; et
- un mécanisme de direction comprenant au moins deux ensembles de roues (30) espacés l'un de l'autre le long de la longueur du châssis (12), dans lequel au moins un des au moins deux ensembles de roues (30) est relié fonctionnellement à un moteur d'entraînement (31) pour permettre la direction de l'appareil de transport (1) ; et
- une unité de commande pour commander le moteur d'entraînement (31) et le mécanisme de levage (20),
dans lequel l'appareil de transport (1) est configuré pour être mobile dans et à travers une cavité dans la charge lorsque la plaque de levage (15) est dans la position abaissée (81),
et dans lequel la plaque de levage (15) est mobile par rapport au châssis (12), dans lequel ledit au moins un mécanisme de levage (20) est relié à la plaque de levage (15) et au châssis (12)
**caractérisé en ce que** ledit au moins un ensemble de roues (30) étant relié fonctionnellement au moteur d'entraînement (31) est relié de manière pivotante au châssis (12), et comprend une paire de roues (32) parallèles et deux moteurs d'entraînement (31) respectifs,
dans lequel chaque roue (32) dans la paire de roues (32) parallèles est reliée fonctionnellement à l'un des moteurs d'entraînement (31) respectifs.

2. Appareil de transport (1) selon la revendication 1, dans lequel les au moins deux ensembles de roues (30) sont reliés fonctionnellement à un moteur d'entraînement (31) et sont reliés de manière pivotante au châssis (12) pour améliorer la direction de l'appareil de transport (1).

3. Appareil de transport (1) selon la revendication 1 ou la revendication 2, dans lequel les au moins deux ensembles de roues (30) peuvent pivoter sur au moins 90 degrés pour obtenir une aptitude au déplacement et à la rotation dans un plan bidimensionnel supportant l'appareil de transport (1).

4. Appareil de transport (1) selon l'une quelconque des revendications précédentes, dans lequel le châssis (12) comprend au moins un moyen de rappel s'étendant entre une portion du châssis (12) et la plaque de levage (15).

5. Appareil de transport (1) selon l'une quelconque des revendications précédentes, dans lequel l'appareil de transport (1) est configuré pour une communication sans fil avec d'autres appareils de transport (1) selon l'une quelconque des revendications précédentes.

6. Appareil de transport (1) selon l'une quelconque des revendications précédentes, dans lequel l'appareil de transport (1) est en outre configuré pour une communication sans fil avec un système de commande externe.

7. Système de transport comprenant au moins deux appareils de transport (1) selon l'une quelconque des revendications précédentes.

8. Système de transport selon la revendication 7 comprenant en outre un système de commande externe.

9. Procédé permettant de transporter une charge, le procédé comprenant les étapes consistant à :
- fournir un appareil de transport (1) selon l'une quelconque des revendications 1 à 8 ;
- déplacer l'appareil de transport (1) dans une cavité dans la charge tandis que la plaque de levage (15) est dans la position abaissée (81) ;
- activer ledit au moins un mécanisme de levage (20) pour déplacer au moins la plaque de levage (15) vers la position élevée (89), pour soulever la charge ;
- déplacer l'appareil de transport (1) vers une position souhaitée ;
- activer ledit au moins un mécanisme de levage (20) pour abaisser au moins la plaque de levage (15) vers la position abaissée (81) pour ramener la charge sur le sol.

10. Procédé selon la revendication 9, comprenant en outre le déplacement de l'appareil de transport (1) à travers une cavité dans une charge tandis que la plaque de levage (15) est dans la position abaissée (81).

11. Procédé selon la revendication 9 ou la revendication 10, comprenant en outre la fourniture d'un système de transport selon la revendication 7 ou la revendication 8.
